# EUROPÄISCHE PATENTSCHRIFT

(11) **EP 3 504 724 B1**
(45) Veröffentlichungstag und Bekanntmachung des Hinweises auf die Patenterteilung: **13.04.2022**
(21) Anmeldenummer: 17748449.0
(22) Anmeldetag: 27.07.2017
(51) Int. Cl.: H01G 4/38, H01G 2/04, H01G 2/08, H01G 4/18, H01G 4/224

(54) **ELEKTRODEN GEKÜHLTE KONDENSATOR-BAUGRUPPE**
ELECTRODES COOLED CAPACITOR ASSEMBLY
ASSEMBLEAGE DE CONDENSATEURS REFROIDIS PAR LES ÉLECTRODES

(30) Priorität: 29.08.2016 DE 102016216237
(43) Veröffentlichungstag der Anmeldung: 03.07.2019
(73) Patentinhaber: Bayerische Motoren Werke Aktiengesellschaft, 80809 München (DE)
(72) Erfinder: HAMERSKI, Roman, 82008 Unterhaching (DE); SUDAN, Christoph, 82547 Eurasburg (DE); HAAS RUGEL, Erick Maximiliano, 80538 München (DE); LAFAYE, Christophe, 82008 Unterhaching (DE)
(86) Internationale Anmeldenummer: PCT/EP2017/069012
(87) Internationale Veröffentlichungsnummer: WO 2018/041486

(56) Entgegenhaltungen:
- EP-A1- 2 511 922
- EP-A1- 2 717 461
- EP-A2- 2 367 277
- WO-A1-2016/002177
- DE-A1-102007 054 618
- DE-A1-102011 007 307
- DE-A1-102014 221 006
- JP-A- 2008 148 530
- JP-A- 2009 177 872
- JP-A- 2010 034 433
- JP-A- 2012 124 319
- JP-A- 2012 199 350
- JP-A- 2014 143 227
- JP-A- 2015 103 777
- JP-A- 2015 109 748

## Beschreibung

Die vorliegende Erfindung betrifft eine Kondensator-Baugruppe gemäß dem Oberbegriff des Patentanspruchs 1 und ein System gemäß dem Oberbegriff des Patentanspruchs 14 sowie ein Fahrzeug gemäß dem Oberbegriff des Patentanspruchs 15.

Elektrische Kondensatoren, bei denen die Kondensatorwickel auf metallisierte Kunststofffolie aufgewickelt sind, müssen isolierende Eigenschaften haben. Die elektrische Isolierung bzw. die Kunststofffolie hat den Nachteil, dass die im Kondensator entstehende Wärme schlecht abgeführt werden kann, insbesondere wenn der Kondensator ein die Wärmeabfuhr behinderndes Gehäuse aufweist. Deswegen kann die Temperatur im Innern eines Kondensators sehr hoch werden, z.B. 100 °C oder höher, wenn der Kondensator im Betrieb ist. Jedoch darf eine bestimmte Temperatur nicht überschritten werden, weil sonst der Kondensator beschädigt wird.

Um eine gute Abführung der in dem Kondensator entstehenden Wärme zu erreichen, ist aus dem Stand der Technik bekannt, den Kondensatorwickel mit gut wärmeleitenden Mitteln einer Kühlvorrichtung in Berührung zu bringen und zwischen einem Ende des Kondensatorwickels und der Kühlvorrichtung eine Wärme leitende Verbindung herzustellen.

Normalerweise sind mehrere Kondensatorwickel in einem Behälter angeordnet. Die Oberseite des Behälters ist offen, so dass eine Kühlvorrichtung auf der Oberseite des Kondensators angeordnet werden kann. Die Wärme an der Oberseite des Kondensators bzw. an der der Kühleinrichtung zugewandeten Seite kann durch einen Kontakt mit einer an der Oberseite des Behälters angeordneten Kühleinrichtung abgeleitet werden. Jedoch wird die an der Unterseite des Kondensators bzw. an der der Kühleinrichtung abgewandeten Seite entstehende Wärme nur schlecht nach außen abgeführt. Nach Untersuchungsergebnissen kann die Unterseite des Kondensators eine hohe Innentemperatur erreichen, was ca. 15°C höher als die Temperatur der Oberseite des Kondensators ist. Falls die Unterseite nicht abgekühlt wird und die Temperatur an der Unterseite des Kondensators eine bestimmte Grenztemperatur überschreitet, kann der Kondensator wegen einer hohen Temperatur an der Unterseite des Kondensators beschädigt werden. Daher müssen sowohl die Oberseite als auch die Unterseite des Kondensators gleichmäßig abgekühlt werden.

Ferner offenbart EP 1 878 031 B1 einen Kondensator, der in einem Gehäuse angeordnet ist. Auf der Oberseite des Kondensators bzw. des Gehäuses ist eine Kühlplatte montiert. Eine Kühlfläche ist auf der Oberseite des Kondensators zum Kühlen des Kondensators vorgesehen. Die Kühlfläche ist durch einen Anschluss des Kondensators gebildet. Der Strom wird über den Anschluss zu dem Kondensator geleitet. Die elektrisch leitenden Bleche der zwei Anschlüsse überlappen einander an der Oberseite des Kondensators. Das obere von zwei Blechen wird als Kühlelement verwendet. Das obere Blech steht in thermischem Kontakt mit der auf der Oberseite des Kondensators montierten Kühlplatte. Damit kann Wärme von der Oberseite und von zwei Seiten des Kondensators durch die Anschlüsse zur Kühlplatte abgeleitet werden.

Die DE 10 2009 055 376 A1 zeigt einen Leistungskondensator mit einem Kondensatorgehäuse, welches eine erste Gehäusewand, insbesondere aus Metall, aufweist, die mit einem Gehäuse einer Elektronikeinheit, galvanisch verbindbar ist. Außerdem weist der Leistungskondensator flächig ausgeführte Bestromungseinheiten zum Bestromen des Leistungskondensators auf, wobei ein erster Teilbereich einer ersten Bestromungseinheit in einem Innenraum des Gehäuses benachbart und beabstandet zu der ersten Gehäusewand oder zu einer mit der ersten Gehäusewand leitfähig verbundenen anderen Gehäusewand des Kondensatorgehäuses verläuft, wobei zwischen dem ersten Teilbereich der ersten Bestromungseinheit und dieser Gehäusewand eine Schicht aus einem von Luft verschiedenem dielektrischem Material angeordnet ist.

Aus der DE 10 2011 007 307 A1 ist eine Speichereinheit zum Speichern elektrischer Energie bekannt. Die Speichereinheit weist wenigstens einen Energiespeicher auf, welcher wenigstens einen positiven und wenigstens einen negativen elektrischen Anschluss aufweist. Der Energiespeicher ist ausgebildet, über den positiven Anschluss und den negativen Anschluss mit elektrischer Energie aufgeladen und entladen zu werden. Erfindungsgemäß ist der positive und/oder der negative Anschluss mindestens mittelbar mit einem Kühlelement wirkverbunden. So kann über den elektrischen Anschluss Wärme an das Kühlelement abgeführt werden. Das Kühlelement bildet in dieser Ausführungsform eine Wärmesenke. Das Kühlelement kann beispielsweise durch ein massives Aluminiumstück gebildet sein.

Die US 2016/0 157 381 A1 zeigt einen elektrischen Leistungswandler mit einem Halbleitermodul, das eine Leistungswandlerschaltung bildet. Außerdem weist der Leistungswandler einen elektrisch mit dem Halbleitermodul verbundenen Kondensator und ein Kühlelement zum Kühlen des Kondensators auf. Der Kondensator enthält einen Elementkörper, der mit einer Innenelektrode versehen ist, und ein Paar von Endflächenelektroden, die an beiden Endflächen des Elementkörpers vorgesehen und mit der Innenelektrode verbunden sind. Das Paar von Endflächenelektroden ist mit einem Paar von Sammelschienen oberflächenkontaktiert.

Die EP 2 728 595 A1 offenbart einen Kondensator mit einem einzelnen Kondensatorblock, der mit mehreren elektrisch parallel geschalteten Kondensatorelementen versehen ist, wobei jedes der Kondensatorelemente an jedem Ende einen Anschlussteil aufweist. Ferner weist der Kondensatorblock eine erste Elektrodenplatte, die die ersten Anschlussteile der Kondensatorelemente elektrisch verbindet; eine zweite Elektrodenplatte, die die zweiten Anschlussteile der Kondensatorelemente elektrisch verbindet und sich zu der Seite fortsetzt, wo die ersten Anschlussteile sind und mindestens eine Bypasselektrodenplatte, die die zweite Elektrodenplatte elektrisch umgeht, auf.

Davon ausgehend ist die Aufgabe der vorliegenden Erfindung, eine Kondensator-Baugruppe mit einer verbesserten Wärmeableitungsfunktion zu schaffen. Außerdem sollten die Kosten und der Bauraum der Kondensator-Baugruppe nicht deutlich erhöht werden.

Diese Aufgabe wird durch die Merkmale des Patentanspruches 1 gelöst. Vorteilhafte Ausgestaltungen und Weiterbildungen der Erfindung sind den Unteransprüchen zu entnehmen, wobei auch Kombinationen der einzelnen Anspruchsmerkmale untereinander möglich sind.

### Offenbarung der Erfindung

Die erfindungsgemäße Kondensator-Baugruppe von Anspruch 1 umfasst einen Kondensator, einen ersten Anschluss, eine Kühlvorrichtung und ein Gehäuse, die den Kondensator enthält. Der erste Anschluss weist einen ersten wärmeaufnehmenden Teil und einen ersten wärmeabgebenden Teil auf. Der erste Anschluss gibt Wärmeleistung von einer ersten Seite des Kondensators über den ersten wärmeaufnehmenden Teil und den ersten wärmeabgebende Teil an die Kühlvorrichtung ab, wobei die erste Seite des Kondensators eine der Kühlvorrichtung abgewandete Seite ist. Außerdem ist der erste Anschluss an einem ersten Rand des Gehäuses angeordnet, wobei der erste wärmeabgebende Teil an einem zweiten Rand des Gehäuses angeordnet ist.

Der erste Anschluss dient somit nicht nur als ein elektrischer Leiter bzw. elektrischer Anschluss der erfindungsgemäßen Kondensator-Baugruppe sondern auch dazu, eine "Wärmebrücke" zwischen der der Kühlvorrichtung abgewandeten Seite des Kondensators und der Kühlvorrichtung zu bilden. Durch die Wärmebrücke kann die an der der Kühlvorrichtung abgewandeten Seite des Kondensators entstehende Wärme nach außen bzw. an die Kühlvorrichtung abgeleitet werden. Daher kann der Kondensator effizient abgekühlt werden, so dass eine Beschädigung des Kondensators aufgrund einer hohen Temperatur an der der Kühlvorrichtung abgewandeten Seite des Kondensators vermieden werden kann.

Vorzugsweise steht der erste wärmeaufnehmende Teil in Wärmekontakt mit der ersten Seite des Kondensators und steht der erste wärmeabgebende Teil in Wärmekontakt mit der Kühlvorrichtung. Die Kontaktflächen der wärmeabgebenden Teile können die Kühlvorrichtung thermisch z.B. über ein elektrisch isolierendes Wärmeleitpad kontaktieren oder über ein anderes, elektrisch isolierendes aber gut wärmeleitendes Element, um die Wärmeleitung zur Kühlvorrichtung zu übertragen. Es ist von Vorteil, wenn dieses elektrisch isolierende aber gut wärmeleitendes Element eine gewisse Elastizität aufweist, da dadurch Fertigungstoleranzen kompensiert werden können und ein dauerhaft guter Wärmeübergang sichergestellt werden kann.

Nach einer Weiterbildung der Erfindung ist der erste wärmeaufnehmende Teil elektrisch mit dem Kondensator verbunden, wobei der erste wärmeabgebende Teil eine erste Kühlfahne aufweist.

Nach einer Weiterbildung der Erfindung umfasst die Kondensator-Baugruppe einen zweiten Anschluss, der einen zweiten wärmeaufnehmenden Teil und einen zweiten wärmeabgebenden Teil aufweist, wobei der zweite Anschluss über den zweiten wärmeaufnehmenden Teil und den ersten wärmeabgebenden Teil eine Wärmeleitung von einer zweiten Seite des Kondensators zu der Kühlvorrichtung ermöglicht. Der Kondensator kann dadurch effizient abgekühlt werden. Eine Beschädigung des Kondensators aufgrund einer hohen Temperatur kann daher vermieden werden

Vorteilhaft dient der zweite Anschluss dazu, eine "Wärmebrücke" zwischen der zweiten Seite des Kondensators und der Kühlvorrichtung zu bilden. Durch die Wärmebrücke kann die an zweiten Seite des Kondensators entstehende Wärme nach außen, bzw. an die Kühlvorrichtung, abgeleitet werden.

Vorzugsweise ist die zweite Seite des Kondensators eine der Kühlvorrichtung zugewandete Seite.

Durch die ersten und zweiten Anschlüsse können die der Kühlvorrichtung abgewandete Seite und die der Kühlvorrichtung zugewandete Seite des Kondensators geleichmäßig abgekühlt werden.

Vorzugsweise steht der zweite wärmeaufnehmende Teil in Wärmekontakt mit der zweiten Seite des Kondensators, wobei der zweite wärmeabgebende Teil in Wärmekontakt mit der Kühlvorrichtung steht.

Vorzugsweise ist der zweite wärmeaufnehmende Teil elektrisch mit dem Kondensator verbunden und der zweite wärmeabgebende Teil weist eine zweite Kühlfahne auf.

Vorzugsweise steht der erste Anschluss in Wärmekontakt mit der Kühlvorrichtung.

Vorteilhaft kann die Wärmeleistung auch durch den ersten Anschluss an die Kühlvorrichtung abgegeben werden.

Vorzugsweise ist die Kühlvorrichtung an dem Gehäuse des Kondensators angeordnet.

Vorzugsweise weist der erste wärmeaufnehmende Teil einen U-förmigen Abschnitt auf, der zwei Schenkel und einen zwischen den zwei Schenkeln vorgesehenen Steg umfasst. Der U-förmige wärmeaufnehmende Teil umschließt den Kondensator von drei Seiten bzw. von der der Kühlvorrichtung abgewandeten Seite und zwei anderen Seiten des Kondensators, wobei der Steg des U-förmigen wärmeaufnehmende Teil mit einer Elektrode des Kondensators an der der Kühlvorrichtung abgewandeten Seite des Kondensators elektrisch verbunden ist.

Vorzugsweise ist der erste wärmeaufnehmende Teil mit dem ersten wärmeabgebenden Teil verbunden.

Ein wesentlicher Vorteil der Erfindung ist darin zu sehen, dass für die erfindungsgemäße Ausgestaltung nahezu kein zusätzlicher Bauraum benötigt wird. Das Gehäuse des

Kondensators braucht daher nicht oder nur unwesentlich modifiziert werden, um die erfindungsgemäße Kondensator-Baugruppe zu implementieren.

Vorzugsweise sind der erste wärmeabgebende Teil und der zweite wärmeabgebende Teil in einer gemeinsamen Ebene angeordnet und voneinander elektrisch isoliert.

Vorzugsweise ist der Kondensator durch eine Vergussmasse in das Gehäuse eingegossen. Dadurch kann der Kondensator durch den Verguss sowohl befestigt werden als auch nach außen elektrisch isoliert werden.

Die vorliegende Erfindung schlägt ferner ein System vor. Das System umfasst ein IGBT-Modul und die oben genannte Kondensator-Baugruppe, wobei die Kühlvorrichtung dazu dient, sowohl die Kondensator-Baugruppe als auch das IGBT-Modul zu kühlen. Das IGBT-Modul ist dazu vorgesehen, eine z.B. von einer Hochvoltbatterie eines Elektro- oder Hybridfahrzeugs bereitgestellte Gleichspannung in eine mehrphasige Wechselspannung umzuwandeln, oder umgekehrt.

Die vorliegende Erfindung schlägt ferner ein Elektrofahrzeug oder ein Hybridfahrzeug mit einem oben genannten System vor.

Während des normalen Betriebs des Kondensators ist die Temperatur an der der Kühlvorrichtung abgewandete Seite des Kondensators am höchsten. Mit der erfindungsgemäßen Anordnung kann die in dem Kondensator entstehende Wärme, insbesondere die Wärme an der der Kühlvorrichtung abgewandeten Seite des Kondensators sehr gut z.B. über Blechstreifen nach außen, bzw. an die Kühlvorrichtung, geleitet werden. Erfindungsgemäß kann der erste elektrische Anschluss des Kondensators eine Wärmebrücke bilden und zwar durch den wärmeaufnehmenden Teil und den wärmeabgebenden Teil bzw. die erste Kühlfahne. Da einerseits der erste wärmeaufnehmende Teil in Wärmekontakt mit der der Kühlvorrichtung abgewandeten Seite des Kondensators steht und andererseits die erste Kühlfahne in Wärmekontakt mit der Kühlvorrichtung steht, kann die an der der Kühlvorrichtung abgewandeten Seite des Kondensators entstehende Wärmeleistung effizient nach außen, bzw. an die Kühlvorrichtung, abgeführt werden. Dadurch kann eine Beschädigung des Kondensators aufgrund einer hohen Innentemperatur vermieden werden.

Vorteilhaft können der Anschluss, der erste wärmeaufnehmende Teil und die Kühlfahne einteilig gebildet werden. Der erste wärmeaufnehmende Teil und die erste Kühlfahne können gemeinsam mit dem ersten Anschluss und der wärmeaufnehmende Teil durch ein Blech gebildet sein, das z.B. ein gestanztes Blech sein kann. Da der erste wärmeaufnehmende Teil und die erste Kühlfahne durch ein Blech einteilig gebildet sein können, ist die Implementierung der Kühlfahne nach der vorliegenden Erfindung relativ kostengünstig.

Außerdem verlangt die erfindungsgemäße Kondensator-Baugruppe keinen weiteren Bauraum, um den wärmeaufnehmenden Teil und die Kühlfahne anzuordnen.

Im Folgenden wird die Erfindung im Zusammenhang mit den Zeichnungen näher erläutert. Es zeigen:
- Fig.1: einen Querschnitt eines Ausführungsbeispiels einer Kondensator-Baugruppe;
- Fig.2A: eine perspektivische Darstellung der Kondensator-Baugruppe nach der Fig. 2; und
- Fig.2B: eine weitere perspektivische Schnittdarstellung der Kondensator-Baugruppe der Fig. 1 bzw. Fig. 2A.

Die nachfolgend erläuterten Ausführungsbeispiele stellen bevorzugte Ausführungsformen der vorliegenden Erfindung dar.

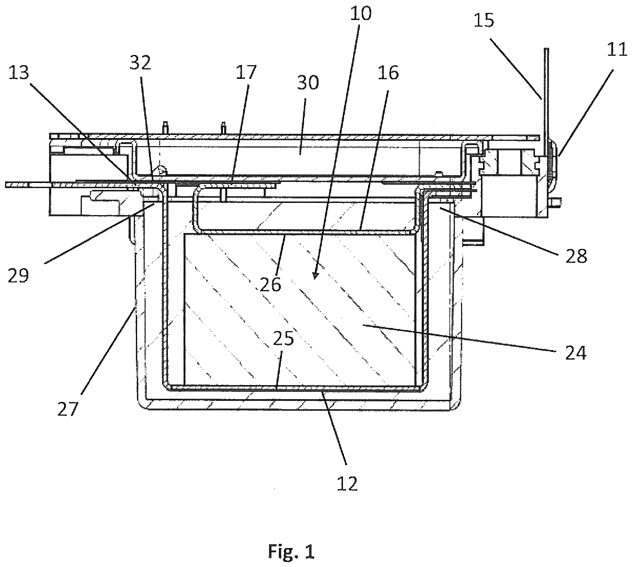

Fig. 1 zeigt eine Kondensator-Baugruppe 10 mit einem Kondensator 24, einem ersten Anschluss 11, einem zweiten Anschluss 15, einer Kühlvorrichtung 30 und einem Gehäuse 27. Die ersten und zweiten Anschlüsse 11 und 15 sind jeweils mit einer Elektrode des Kondensators verbunden. Der erste und zweite Anschluss 11 und 15 sind auf einem Abschnitt 14 übereinander verlaufend angeordnet, wobei zwischen den beiden Anschlüssen 11 und 15 noch eine Isolierung vorgesehen ist. Die Isolierung wird ggf. mehrlagig ausgeführt. Die ersten und zweiten Anschlüsse 11 und 15 sind jeweils in einem ersten Rand 28 des Gehäuses 27 aus dem Gehäuse 27 herausgeführt. Die Kühlvorrichtung 30, z.B. ein Flüssigkeitskühler, ist oberhalb der Öffnung des Gehäuses 27 vorgesehen.

Der erste Anschluss 11 weist einen ersten wärmeaufnehmenden Teil 12 auf. Der erste wärmeaufnehmende Teil 12 ist durch ein U-förmiges Blech gebildet. Der U-förmige erste wärmeaufnehmende Teil 12 ist mit der Unterseite 25 des Kondensators 24, d.h. mit der der Kühlvorrichtung 30 abgewandeten Seite, elektrisch verbunden. Der erste wärmeaufnehmende Teil 12 erstreckt sich von dem ersten Rand 28 des Gehäuses 27 zu einer Unterseite 25 des Kondensators 24 und von der Unterseite 25 des Kondensators 24 zu einem zweiten Rand 29 des Gehäuses 27. An der unteren Kontaktfläche des ersten wärmeaufnehmenden Teils 12 befindet sich ein Lötbereich zum Anlöten einer Kontaktfläche der Unterseite 25 des Kondensators 24, so dass der erste wärmeaufnehmende Teil 12 an der Unterseite 25 des Kondensators 24 befestigt werden kann.

Der erste wärmeaufnehmende Teil 12 ist mit einer Kühlfahne 13 außerhalb des Gehäuses 27 verbunden. Die Kühlfahne 13 ist oberhalb des Gehäuses 27 angeordnet und steht in Wärmekontakt mit der Kühlvorrichtung 30, die oberhalb des Kondensators 24 montiert ist. Der erste wärmeaufnehmende Teil 12 und die Kühlfahne 13 bilden eine Wärmebrücke zwischen der Unterseite 25 des Kondensators 24 und der oberen Seite des Gehäuses 27 bzw. der Kühlvorrichtung 30. Da die Kühlfahne 13 in Wärmekontakt mit der Kühlvorrichtung 30 steht, kann die an der Unterseite des Kondensators entstehende Wärme gut zu der Kühlfahne 13 an der oberen Seite des Gehäuses 27 abgeführt werden und durch den Wärmekontakt zwischen der Kühlfahne 13 und der Kühlvorrichtung 30 weiterhin zur Kühlvorrichtung 30 geleitet werden.

Die Kühlfahne 13 kann so angeordnet werden, dass ihre Kontaktfläche über ein elektrisch isolierendes Wärmeleitmaterial 32, z.B. ein Wärmeleitpad, thermisch mit der Kühlvorrichtung 30 verbunden ist, um Wärme an die Kühlvorrichtung 30 zu übertragen. Dadurch wird die Temperatur der Unterseite 25 des Kondensators 24 abgesenkt. Eine Beschädigung des Kondensators aufgrund der an der Unterseite des Kondensators entstehenden hohen Wärmeleistung kann daher vermieden werden.

Zwar sind die Isolierschichten des Wärmeleitmaterials 32 einlagig dargestellt, sie können jedoch besonders bevorzugt zwei- oder sogar mehrlagig ausgeführt sein. Insbesondere kann die Isolierung mittels mehrlagiger Isolierfolien erfolgen.

Der erste Anschluss 11 umfasst den ersten wärmeaufnehmenden Teil 12 und die Kühlfahne 13, so dass die Wärmeleistung von der Unterseite des Kondensators, der am Boden des Gehäuses 27 vorgesehen ist, durch den ersten Anschluss 11, den ersten wärmeaufnehmenden Teil 12 und die Kühlfahne 13 nach Außen geleitet werden kann. Der erste Anschluss 11, der wärmeaufnehmende Teil 12 und die Kühlfahne 13 können durch Biegen eines Blechs hergestellt werden. Der wärmeaufnehmende Teil 12 kann auch als separates Teil am ersten Anschluss 11 befestigt sein. Die Kühlfahne 13 kann auch als separates Teil mit dem wärmeaufnehmenden Teil 12 verbunden sein.

Der Abschnitt 14 ist am ersten Rand 28 des Gehäuses 27 angeordnet und steht in Wärmekontakt mit der Kühlvorrichtung 30, so dass die beiden Anschlüsse 11 und 15 die Wärme über den Anschnitt 14 an die Kühlvorrichtung 30 abgeben können.

Ganz analog weist der zweite Anschluss 15 einen zweiten wärmeaufnehmenden Teil 16 auf. Der zweite wärmeaufnehmende Teil 16 ist durch ein Blech gebildet, das mit der Oberseite 26, d.h. mit der der Kühlvorrichtung 30 zugewandeten Seite des Kondensators 24 in Wärmekontakt steht. Der wärmeaufnehmende Teil 16 erstreckt sich von dem ersten Rand 28 des Gehäuses 27 auf die Oberseite 26 des Kondensators 24 entlang zum zweiten Rand 29 des Gehäuses 27. An der unteren Kontaktfläche des wärmeaufnehmenden Teils 16 befindet sich ein Lötbereich zum Anlöten einer Kontaktfläche der Oberseite 26 des Kondensators 24, so dass der wärmeaufnehmende Teil 16 an der Oberseite 26 des Kondensators 24 befestigt werden kann.

Der wärmeaufnehmende Teil 16 ist mit einer Kühlfahne 17 oberhalb des Gehäuses 27 verbunden. Die Kühlfahne 17 steht in Wärmekontakt mit der Kühlvorrichtung 30, die oberhalb des Kondensators 24 angeordnet ist. Die Kühlfahne 17 und der wärmeaufnehmende Teil 16 sind in der in Fig. 1 gezeigten Seitenansicht U-förmig gebogen. Der wärmeaufnehmende Teil 16 und die Kühlfahne 17 bilden eine Wärmebrücke zwischen der Oberseite 26 des Kondensators 24 und der Kühlvorrichtung 30. Da die Kühlfahne 17 in Wärmekontakt mit der Kühlvorrichtung 30 steht, kann die an der Oberseite des Kondensators entstehende Wärme leicht zu der Kühlfahne 17 nach außen geleitet werden und durch den Wärmekontakt zwischen der Kühlfahne 17 und der Kühlvorrichtung 30 zur Kühlvorrichtung 30 geleitet werden.

Die Kühlfahne 17 kann so angeordnet werden, dass ihre Kontaktfläche über das elektrisch isolierende Wärmeleitmaterial 32 thermisch mit der Kühlvorrichtung 30 verbunden ist, um Wärme an die Kühlvorrichtung 30 zu übertragen. Dadurch kann die Temperatur der Oberseite 26 des Kondensators 24 abgesenkt werden.

Der zweite Anschluss 15 umfasst den wärmeaufnehmenden Teil 16 und die Kühlfahne 17, so dass die Wärmemenge von der Oberseite 26 des Kondensators 24 durch den zweiten Anschluss 15, den wärmeaufnehmenden Teil 16 und die Kühlfahne 17 nach außen geleitet werden kann. Der zweite Anschluss 15, der wärmeaufnehmende Teil 16 und die Kühlfahne 17 können durch Biegen eines Blechs hergestellt werden. Der wärmeaufnehmende Teil 16 kann auch als separates Teil an dem zweiten Anschluss 15 befestigt sein. Die Kühlfahne 17 kann auch als separates Teil mit dem wärmeaufnehmenden Teil 16 verbunden sein.

Zum Schutz des Kondensators 24 und seiner Kontaktierungsflächen bzw. der wärmeaufnehmenden Teile 12 und 16 ist es sinnvoll, eine Vergussmasse, z.B. Kunstharz, in das Gehäuse 27 zu vergießen. Der Kondensator 24 kann also in das Gehäuse 27 eingegossen sein. Die Oberkannte der Vergussmasse befindet sich zwischen der Oberseite 26 des Kondensators 24 und der Oberkannte des Gehäuses 27. Daher ist eine hermetische Umschließung des Kondensators 24 sowie der wärmeaufnehmenden Teile 12 und 16 durch den Verguss verwirklicht. Außerdem ist bei dem gezeigten Ausführungsbeispiel ein kurzer thermischer Pfad von den Kontaktierungsflächen des Kondensators 24 zu den Kühlfahnen 13 und 17 realisiert.

Die Kühlvorrichtung 30 kann an einem IGBT-Modul (IGBT bedeutet: Bipolartransistor mit isolierter Gate-Elektrode) angeordnet sein. Beispielsweise ist die Kühlvorrichtung 30 zwischen der Kondensator-Baugruppe 10 und dem IGBT-Modul (nicht gezeigt) vorgesehen, wobei die Kühlvorrichtung auch dazu dient, das IGBT-Modul abzukühlen. Vorteilhaft können die Kondensator-Baugruppe 10 und das IGBT-Modul die Wärmeleistung an eine gemeinsame Kühlvorrichtung abgeben.

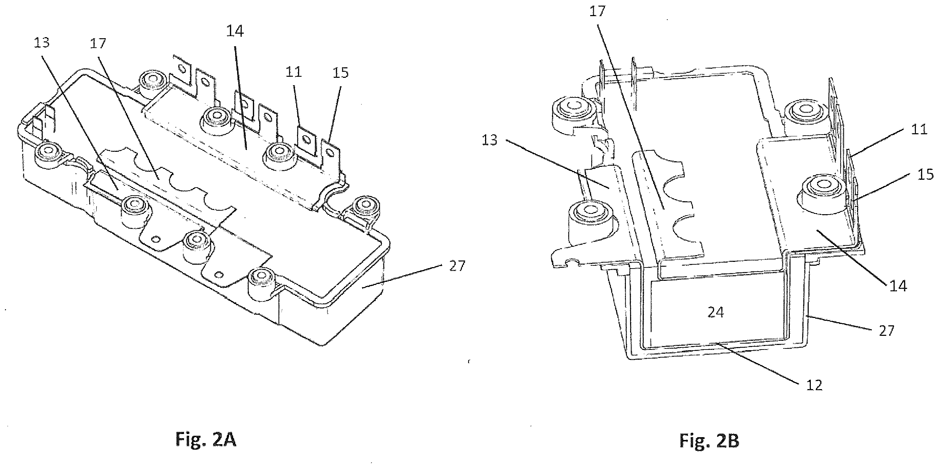

Fig. 2A und Fig. 2B zeigen die erfindungsgemäße Kondensator-Baugruppe ohne die Kühlvorrichtung 30 in perspektivische Darstellung. Die Kühlfahnen 13 und 17 sind auf derselbe Ebene angeordnet und in zwei entgegengesetzten Richtungen abgebogen, um voneinander zu isolieren. Die Kühlfahnen 13 und 17 sind so gestaltet, dass die Kontaktfläche der Kühlfahnen 13 und 17 genügend groß ist, die Wärmemenge via das Wärmeleitmaterial 32 zu der Kühlvorrichtung 30 zu übertragen. Je besser die Wärmeleitung des Wärmeleitmaterials 32 ist desto kleiner können die Kühlfahne 13 und 17 ausgebildet werden. Die Kühlfahnen 13 und 17 können durch Metallblech aus z.B. Kupfer oder Aluminium gebildet werden. Die Kühlfahnen 13 und 17 können rechteckig sein. Zur besseren Wärmeableitung können in den Kühlfahnen 13 und 17 auch mehrere Schlitze vorgesehen sein.

Im oberen Bereich der Kondensator-Baugruppe in Fig. 2A ist zu erkennen, dass zur Verringerung der Induktivität des Kondensators für jeden Anschluss drei nach oben stehende Kontaktbleche vorgesehen sind, so dass sich eine niederinduktive Verteilung des Stroms über eine große Fläche eines Anschlusses ergibt. Die Anzahl der Kontaktbleche kann aber auch erhöht oder reduziert werden, je nach Anwendung des Kondensators.

## Patentansprüche

1. Kondensator-Baugruppe (10) umfassend einen Kondensator (24), einen ersten Anschluss (11), eine Kühlvorrichtung (30) und ein Gehäuse (27), die den Kondensator (24) enthält,
**dadurch gekennzeichnet,**
**dass** der erste Anschluss (11) einen ersten wärmeaufnehmenden Teil (12) und einen ersten wärmeabgebenden Teil (13) aufweist, wobei der erste Anschluss (11) über den ersten wärmeaufnehmenden Teil (12) und den ersten wärmeabgebende Teil (13) Wärme von einer ersten Seite (25) des Kondensators (24) an die Kühlvorrichtung (30) abgibt;
wobei die erste Seite (25) des Kondensators (24) eine der Kühlvorrichtung (30) abgewandete Seite ist, und
wobei der erste Anschluss (11) an einem ersten Rand (28) des Gehäuses (27) angeordnet ist, wobei der erste wärmeabgebende Teil (13) an einem zweiten Rand (29) des Gehäuses (27) angeordnet ist.

2. Kondensator-Baugruppe (10) nach Anspruch 1, **dadurch gekennzeichnet, dass** der erste wärmeaufnehmende Teil (12) in Wärmekontakt mit der ersten Seite (25) des Kondensators (24) steht und der erste wärmeabgebende Teil (13) in Wärmekontakt mit der Kühlvorrichtung (30) steht.

3. Kondensator-Baugruppe (10) nach einem der vorherigen Ansprüche, **dadurch gekennzeichnet, dass** der erste wärmeaufnehmende Teil (12) elektrisch mit dem Kondensator (24) verbunden ist und der erste wärmeabgebende Teil (13) eine erste Kühlfahne aufweist.

4. Kondensator-Baugruppe (10) nach einem der vorherigen Ansprüche, **dadurch gekennzeichnet, dass** die Kondensator-Baugruppe (10) einen zweiten Anschluss (15) umfasst, der einen zweiten wärmeaufnehmenden Teil (16) und einen zweiten wärmeabgebenden Teil (17) aufweist, wobei der zweite Anschluss (15) über den zweiten wärmeaufnehmenden Teil (16) und den ersten wärmeabgebenden Teil (17) Wärme von einer zweiten Seite (26) des Kondensators (24) zu der Kühlvorrichtung (30) abgibt.

5. Kondensator-Baugruppe (10) nach Anspruch 4, **dadurch gekennzeichnet, dass** die zweite Seite (26) des Kondensators (24) eine der Kühlvorrichtung (30) zugewandete Seite ist.

6. Kondensator-Baugruppe (10) nach einem der Ansprüche 4 - 5, **dadurch gekennzeichnet, dass** der zweite wärmeaufnehmende Teil (16) in Wärmekontakt mit der zweiten Seite (26) des Kondensators (24) steht und der zweite wärmeabgebende Teil (17) in Wärmekontakt mit der Kühlvorrichtung (30) steht.

7. Kondensator-Baugruppe (10) nach einem der Ansprüche 4 - 6, **dadurch gekennzeichnet, dass** der zweite wärmeaufnehmende Teil (16) elektrisch mit dem Kondensator (24) verbunden ist und der zweite wärmeabgebende Teil (17) eine zweite Kühlfahne aufweist.

8. Kondensator-Baugruppe (10) nach einem der vorherigen Ansprüche, **dadurch gekennzeichnet, dass** der erste Anschluss (11) in Wärmekontakt mit der Kühlvorrichtung (30) steht.

9. Kondensator-Baugruppe (10) nach einem der vorherigen Ansprüche, **dadurch gekennzeichnet, dass** die Kühlvorrichtung (30) an dem Gehäuse (27) angeordnet ist.

10. Kondensator-Baugruppe (10) nach einem der vorherigen Ansprüche, **dadurch gekennzeichnet, dass** der erste wärmeaufnehmende Teil (12) einen U-förmigen Abschnitt aufweist.

11. Kondensator-Baugruppe (10) nach einem der vorherigen Ansprüche, **dadurch gekennzeichnet, dass** der erste wärmeaufnehmende Teil (12) mit dem ersten wärmeabgebenden Teil (13) verbunden ist.

12. Kondensator-Baugruppe (10) nach einem der vorherigen Ansprüche, **dadurch gekennzeichnet, dass** der erste wärmeabgebende Teil (13) und der zweite wärmeabgebende Teil (17) in einer gemeinsamen Ebene angeordnet und voneinander elektrisch isoliert sind.

13. Kondensator-Baugruppe (10) nach einem der vorherigen Ansprüche, **dadurch gekennzeichnet, dass** der Kondensator (24) durch eine Vergussmasse in das Gehäuse eingegossen ist.

14. System umfassend ein IGBT-Modul und eine Kondensator-Baugruppe (10) nach einem der vorherigen Ansprüche, wobei die Kühlvorrichtung (30) auch dazu dient, das IGBT-Modul abzukühlen .

15. Elektrofahrzeug oder Hybridfahrzeug mit einem System nach Anspruch 14.

## Claims

1. Capacitor assembly (10) comprising a capacitor (24), a first terminal (11), a cooling device (30), and a housing (27) which contains the capacitor (24), **characterized in that**
the first terminal (11) has a first heat-absorbing part (12) and a first heat-dissipating part (13), wherein the first terminal (11) by way of the first heat-absorbing part (12) and of the first heat-dissipating part (13) dissipates heat from a first side (25) of the capacitor (24) to the cooling device (30);
wherein the first side (25) of the capacitor (24) is a side that faces away from the cooling device (30); and
wherein the first terminal (11) is disposed on a first periphery (28) of the housing (27), wherein the first heat-dissipating part (13) is disposed on a second periphery (29) of the housing (27).

2. Capacitor assembly (10) according to Claim 1, **characterized in that** the first heat-absorbing part (12) is in thermal contact with the first side (25) of the capacitor (24), and the first heat-dissipating part (13) is in thermal contact with the cooling device (30).

3. Capacitor assembly (10) according to one of the preceding claims, **characterized in that** the first heat-absorbing part (12) is electrically connected to the capacitor (24), and the first heat-dissipating part (13) has a first cooling lug.

4. Capacitor assembly (10) according to one of the preceding claims, **characterized in that** the capacitor assembly (10) comprises a second terminal (15) which has a second heat-absorbing part (16) and a second heat-dissipating part (17), wherein the second terminal (15) by way of the second heat-absorbing part (16) and of the first heat-dissipating part (17) dissipates heat from a second side (26) of the capacitor (24) to the cooling device (30).

5. Capacitor assembly (10) according to Claim 4, **characterized in that** the second side (26) of the capacitor (24) is a side that faces the cooling device (30).

6. Capacitor assembly (10) according to one of Claims 4 to 5, **characterized in that** the second heat-absorbing part (16) is in thermal contact with the second side (26) of the capacitor (24), and the second heat-dissipating part (17) is in thermal contact with the cooling device (30).

7. Capacitor assembly (10) according to one of Claims 4 to 6, **characterized in that** the second heat-absorbing part (16) is electrically connected to the capacitor (24), and the second heat-dissipating part (17) has a second cooling lug.

8. Capacitor assembly (10) according to one of the preceding claims, **characterized in that** the first terminal (11) is in thermal contact with the cooling device (30).

9. Capacitor assembly (10) according to one of the preceding claims, **characterized in that** the cooling device (30) is disposed on the housing (27).

10. Capacitor assembly (10) according to one of the preceding claims, **characterized in that** the first heat-absorbing part (12) has a U-shaped portion.

11. Capacitor assembly (10) according to one of the preceding claims, **characterized in that** the first heat-absorbing part (12) is connected to the first heat-dissipating part (13).

12. Capacitor assembly (10) according to one of the preceding claims, **characterized in that** the first heat-dissipating part (13) and the second heat-dissipating part (17) are disposed in a common plane and are mutually electrically insulated.

13. Capacitor assembly (10) according to one of the preceding claims, **characterized in that** the capacitor (24) is cast into the housing by way of a casting compound.

14. System comprising an IGBT module and a capacitor assembly (10) according to one of the preceding claims, wherein the cooling device (30) also serves for cooling the IGBT module.

15. Electric vehicle or a hybrid vehicle having a system according to Claim 14.

## Revendications

1. Ensemble à condensateur (10) comprenant un condensateur (24), une première borne (11), un dispositif de refroidissement (30) et un boîtier (27) contenant le condensateur (24),
**caractérisé en ce que**
la première borne (11) comporte une première partie à absorption de chaleur (12) et une première partie à dégagement de chaleur (13), la première borne (11) dégageant de la chaleur depuis un premier côté (25) du condenseur (24) vers le dispositif de refroidissement (30) par le biais de la première partie à absorption de chaleur (12) et une première partie à dégagement de chaleur (13) ;
le premier côté (25) du condenseur (24) étant un côté opposé au dispositif de refroidissement (30), et
la première borne (11) étant disposée sur un premier bord (28) du boîtier (27), la première partie émettant de la chaleur (13) étant disposée sur un deuxième bord (29) du boîtier (27).

2. Ensemble à condensateur (10) selon la revendication 1, **caractérisé en ce que** la première pièce à absorption de chaleur (12) est en contact thermique avec le premier côté (25) du condensateur (24) et la première partie à dégagement de chaleur (13) est en contact thermique avec le dispositif de refroidissement (30).

3. Ensemble à condensateur (10) selon l'une des revendications précédentes, **caractérisé en ce que** la première partie à absorption de chaleur (12) est reliée électriquement au condensateur (24) et la première partie à dégagement de chaleur (13) comporte une première ailette de refroidissement.

4. Ensemble à condensateur (10) selon l'une des revendications précédentes, **caractérisé en ce que** l'ensemble à condensateur (10) comprend une deuxième borne (15) qui comporte une deuxième partie à absorption de chaleur (16) et une deuxième partie à dégagement de chaleur (17), la deuxième borne (15) dégageant de la chaleur depuis un deuxième côté (26) du condenseur (24) vers le dispositif de refroidissement (30) par le biais de la deuxième partie à absorption de chaleur (16) et de la première partie à dégagement de la chaleur (17).

5. Ensemble à condensateur (10) selon la revendication 4, **caractérisé en ce que** le deuxième côté (26) du condensateur (24) est un côté dirigé vers le dispositif de refroidissement (30).

6. Ensemble à condensateur (10) selon l'une des revendications 4-5, **caractérisé en ce que** la deuxième partie à absorption de chaleur (16) est en contact thermique avec le deuxième côté (26) du condensateur (24) et la deuxième partie à dégagement de chaleur (17) est en contact thermique avec le dispositif de refroidissement (30).

7. Ensemble à condensateur (10) selon l'une des revendications 4 à 6, **caractérisé en ce que** la deuxième partie à absorption de chaleur (16) est reliée électriquement au condensateur (24) et la deuxième partie à dégagement de chaleur (17) comporte une deuxième ailette de refroidissement.

8. Ensemble à condensateur (10) selon l'une des revendications précédentes, **caractérisé en ce que** la première borne (11) est en contact thermique avec le dispositif de refroidissement (30).

9. Ensemble à condensateur (10) selon l'une des revendications précédentes, **caractérisé en ce que** le dispositif de refroidissement (30) est disposé sur le boîtier (27).

10. Ensemble à condensateur (10) selon l'une des revendications précédentes, **caractérisé en ce que** la première partie à absorption de chaleur (12) comporte une portion en forme de U.

11. Ensemble à condensateur (10) selon l'une des revendications précédentes, **caractérisé en ce que** la première partie à absorption de chaleur (12) est reliée à la première partie à dégagement de chaleur (13).

12. Ensemble à condensateur (10) selon l'une des revendications précédentes, **caractérisé en ce que** la première partie à dégagement de chaleur (13) et la deuxième partie à dégagement de chaleur (17) sont disposées dans un plan commun et sont isolées électriquement l'une de l'autre.

13. Ensemble à condensateur (10) selon l'une des revendications précédentes, **caractérisé en ce que** le condensateur (24) est coulé dans le boîtier par un composé d'enrobage.

14. Système comprenant un module IGBT et un ensemble à condensateur (10) selon l'une des revendications précédentes, le dispositif de refroidissement (30) servant également à refroidir le module IGBT.

15. Véhicule électrique ou véhicule hybride comprenant un système selon la revendication 14.
